# DEMANDE DE BREVET EUROPEEN

(11) **EP 3 581 744 A1**
(43) Date de publication de la demande: **18.12.2019**
(21) Numéro de dépôt: 18177723.6
(22) Date de dépôt: 14.06.2018
(51) Int. Cl.: E05C 19/02

(54) **MECANISME ESCAMOTABLE**

(71) Demandeur: PA.COTTE SA, 1009 Pully (CH)
(72) Inventeur: AFFRE DE SAINT ROME, Ronan, 44521 OUDON (FR)
(74) Mandataire: reuteler & cie SA

(57) **Abrégé**

L'invention concerne un mécanisme escamotable (10) comportant un châssis (20), un boitier escamotable (12) configuré pour occuper une position escamotée dans laquelle le boitier escamotable (12) est verrouillé dans le châssis et une position déployée par rapport au châssis, et un actionneur (25). L'actionneur comprend un chemin de came (30) agencé sur le boitier escamotable (12), un suiveur de came (39) solidaire d'une bascule (34) agencée dans le châssis, et un poussoir (40) pour amener le boitier escamotable (12) de sa position escamotée à sa position déployée lorsque le boitier escamotable est déverrouillé. Le chemin de came (30) comporte une portion de verrouillage (30a) dans laquelle le suiveur de came (39) est agencé lorsque le boitier escamotable (12) est verrouillé dans sa position escamotée. L'actionneur (25) comporte en outre un organe de retenue (46) agencé pour empêcher le suiveur de came (39) de sortir de la portion de verrouillage (30a) du chemin de came (30) tant que la force exercée sur une paroi d'appui (13) du boitier escamotable (12) n'excède pas une valeur de seuil prédéterminée de sorte à empêcher un déverrouillage involontaire du mécanisme escamotable

## Description

### DOMAINE TECHNIQUE

L'invention se rapporte à un mécanisme escamotable comportant un châssis et un boitier escamotable dans le châssis. Ce mécanisme comporte un actionneur du type *"push-push"* permettant d'actionner le boitier escamotable d'une position escamotée à une position déployée par rapport au châssis et réciproquement par deux pressions successives exercées sur une paroi du boitier escamotable. Ce mécanisme est particulièrement adapté pour être intégré dans un attaché-case ou dans un appareil électronique.

### ARRIÈRE-PLAN-TECHNOLOGIQUE

De nombreux mécanismes du type *"push-push"* sont mis en oeuvre dans différents domaines techniques. Ces mécanismes permettent en général de verrouiller et déverrouiller deux pièces l'une par rapport à l'autre par deux pressions successives exercées sur l'une des deux pièces. L'une des pièces comporte à cet effet un chemin de came comprenant une portion de verrouillage alors que l'autre pièce comporte une bascule sur laquelle est monté un suiveur de came. Le suiveur de came est agencé pour se déplacer le long d'une première portion du chemin de came sous l'action d'une première pression sur l'une des deux pièces de manière à venir se loger dans la portion de verrouillage afin de verrouiller le mécanisme. Une seconde pression sur cette pièce permet de déloger le suiveur de came de la portion de verrouillage afin de déverrouiller le mécanisme et de permettre au suiveur de came de se déplacer le long d'une seconde portion du chemin de came.

US2017277231 divulgue par exemple un mécanisme du type *"push-push"* appliqué à un système de cartouche de stockage amovible.

L'objet de l'invention est de fournir un mécanisme escamotable comportant un boitier escamotable et un actionneur du type *"push-push"* selon une solution alternative afin que l'actionnement du mécanisme escamotable soit fiable, robuste et précis.

Il est avantageux de fournir un mécanisme escamotable robuste, fiable et facile d'utilisation.

Il est avantageux de fournir un mécanisme escamotable déverrouillable par une pression occasionnant une course minimale du boitier escamotable tout en empêchant un déverrouillage involontaire du mécanisme.

Il est avantageux de fournir un mécanisme escamotable qui permet d'accéder à plusieurs éléments fonctionnels.

Il est avantageux de fournir un mécanisme escamotable capable d'être intégré dans différents objets pour des applications différentes.

### RESUME DE L'INVENTION

Selon un premier aspect de l'invention, le mécanisme escamotable comporte un châssis, un boitier escamotable configuré pour occuper une position escamotée dans laquelle le boitier escamotable est verrouillé dans le châssis et une position déployée par rapport au châssis, ainsi qu'un actionneur. L'actionneur comprend un chemin de came agencé sur le boitier escamotable, un suiveur de came solidaire d'une bascule agencée dans le châssis, et un poussoir pour amener le boitier escamotable de sa position escamotée à sa position déployée lorsque le boitier escamotable est déverrouillé. Le chemin de came comporte une portion de verrouillage dans laquelle le suiveur de came est agencé lorsque le boitier escamotable est verrouillé dans sa position escamotée. L'actionneur comporte en outre un organe de retenue agencé pour empêcher le suiveur de came de sortir de la portion de verrouillage du chemin de came tant que la force exercée sur une paroi d'appui du boitier escamotable n'excède pas une valeur de seuil prédéterminée de sorte à empêcher un déverrouillage accidentel ou involontaire du mécanisme escamotable.

Dans une forme d'exécution avantageuse, l'organe de retenue est engagé contre la bascule pour empêcher son pivotement tant que la force exercée sur la paroi d'appui du boitier escamotable est en deçà de la valeur de seuil prédéterminée.

Dans une forme d'exécution, l'organe de retenue est agencé pour pivoter autour d'un axe de pivotement dès que la force exercée sur la paroi d'appui excède la valeur de seuil prédéterminée afin de permettre à la bascule de pivoter.

Dans une forme d'exécution avantageuse, l'organe de retenue coopère avec des moyens de maintien qui sont configurés pour maintenir l'organe de retenue contre une surface d'appui de sorte à ce que l'organe de retenue soit engagé contre la bascule jusqu'à ce que la valeur de seuil prédéterminée est atteinte. Les moyens de maintien comportent un aimant permanent et un matériau ferromagnétique intégré respectivement au niveau de la surface d'appui et au niveau de l'organe de retenue ou inversement de sorte à ce que la surface d'appui exerce une force d'attraction sur l'organe de retenue.

Dans une forme d'exécution avantageuse, le rapport entre la course du boitier escamotable de la position escamotée à la position déployée et la course du boitier dans le sens opposé pour déverrouiller le mécanisme escamotable est supérieur à 10, de préférence supérieur à 50, voire supérieur à 100.

Dans une forme d'exécution avantageuse, le chemin de came comporte une portion d'actionnement inclinée de sorte à ce que la course nécessaire du boitier escamotable pour déverrouiller le mécanisme escamotable est inférieure à 2 mm et de préférence inférieure à 1 mm, voire inférieure à 0.5 mm.

Dans une forme d'exécution, la bascule comporte des moyens anti-retours afin d'empêcher la bascule de pivoter en sens inverse lorsque le suiveur de came se déplace le long de la portion d'actionnement.

Dans une forme d'exécution, le boitier escamotable comporte une chambre de reception configurée pour recevoir un réceptacle lorsque le boitier escamotable est dans sa position escamotée. Le réceptacle comporte un logement dans lequel sont montés la bascule et l'organe de retenue.

Dans une forme d'exécution, le poussoir comporte un organe élastique configuré pour coopérer avec le réceptacle et agencé au moins en partie dans la chambre de réception. L'organe élastique est en appui contre une partie du boitier escamotable.

Dans une forme d'exécution avantageuse, le chemin de came comporte une portion de sortie contre laquelle le suiveur de came se déplace lors du déploiement du boitier escamotable. Le chemin de came comporte en outre une portion d'entrée contre laquelle le suiveur de came se déplace lors du rabattement du boitier escamotable dans une position escamotée. L'organe de retenue est configuré pour déplacer la bascule dès que le suiveur de came se désengage du chemin de came de sorte à positionner le suiveur de came pour qu'il puisse engager la portion d'entrée du chemin de came lorsque que le boitier escamotable est rabattu dans sa position escamotée.

Dans une forme d'exécution avantageuse, le poussoir comporte un régulateur de vitesse comprenant une crémaillère connectée au boitier escamotable. La crémaillère est en prise avec un pignon et est montée pour se déplacer en translation à l'intérieur d'un coulisseau.

Dans une forme d'exécution avantageuse, le boitier escamotable à une forme s'apparentant à un cube ou à un prisme rectangulaire comportant quatre parois orthogonales à la paroi d'appui du boitier escamotable. Au moins un élément fonctionnel est intégré sur l'une des quatre parois du cube ou du prisme rectangulaire.

Dans une forme d'exécution, l'élément fonctionnel est sélectionné parmi les éléments fonctionnels du groupe comportant un connecteur de données, un connecteur d'alimentation, une caméra, un haut-parleur, un microphone et un détecteur.

Un second aspect de l'invention porte sur un attaché-case comportant le mécanisme escamotable selon le premier aspect de l'invention et ses formes d'exécutions décrites ci-dessus.

Un troisième aspect de l'invention porte sur un appareil électronique, de préférence portable, comportant le mécanisme escamotable selon le premier aspect de l'invention et ses formes d'exécutions décrites ci-dessus.

### BRÈVE DESCRIPTION DES FIGURES

D'autres caractéristiques et avantages de l'invention apparaîtront plus clairement à la lecture de la description suivante d'une forme de réalisation préférentielle de l'invention, donnée à titre d'exemple illustratif et non limitatif, et des dessins annexés parmi lesquels :
La figure 1 est une vue en perspective de mécanisme escamotable selon l'invention comportant un boitier escamotable dans une configuration déployée par rapport au châssis ;
La figure 2 est une vue partielle du mécanisme escamotable de la figure 1 dans laquelle une partie du châssis n'est pas représentée ;
La figure 3 est une vue du mécanisme escamotable de la figure 2 selon une autre perspective ;
La figure 4 est une vue partielle en perspective du mécanisme escamotable avec une représentation de l'actionneur du type *"push-push" ;*
La figure 5 est vue agrandie d'une partie de l'actionneur de la figure 4 ;
La figure 6 est une vue partielle du mécanisme escamotable avec une représentation de l'actionneur selon une autre perspective ;
La figure 7 est une vue en perspective d'une paroi de la chambre de reception du boitier escamotable avec un chemin de came agencé sur la paroi ;
La figure 8 est une vue de face du chemin de came de la figure 7 coopérant avec le suiveur de came ;
Les figures 9a à 9f représentent des vues partielles du mécanisme escamotable lorsque celui-ci est déverrouillé et que le boitier escamotable passe de sa position escamotée à sa position déployée ; et
Les figures 10a à 10c représentent des vues partielles du mécanisme escamotable illustrant différentes séquences du verrouillage du boitier escamotable lorsque celui-ci est rabattu de sa position déployée à sa position escamotée.

### DÉSCRIPTION DÉTAILLÉE D'UNE FORME DE RÉALISATION PRÉFÉRENTIELLE

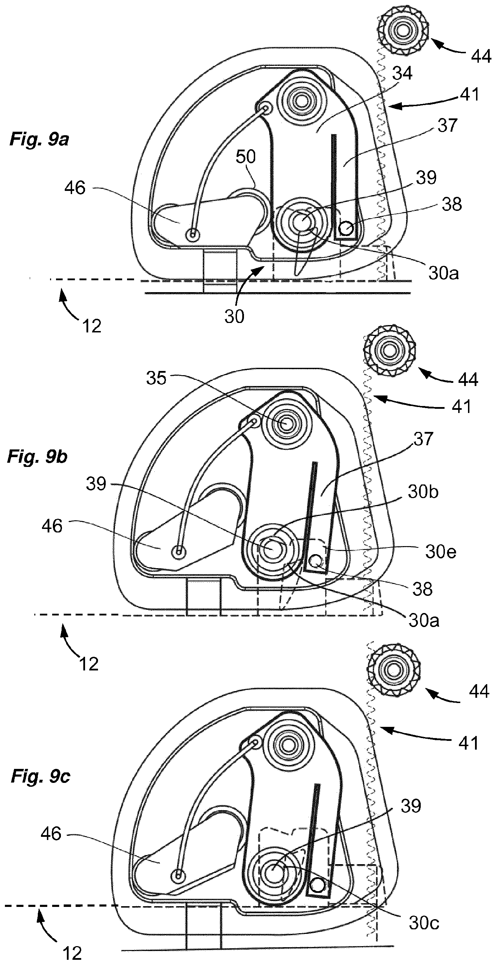

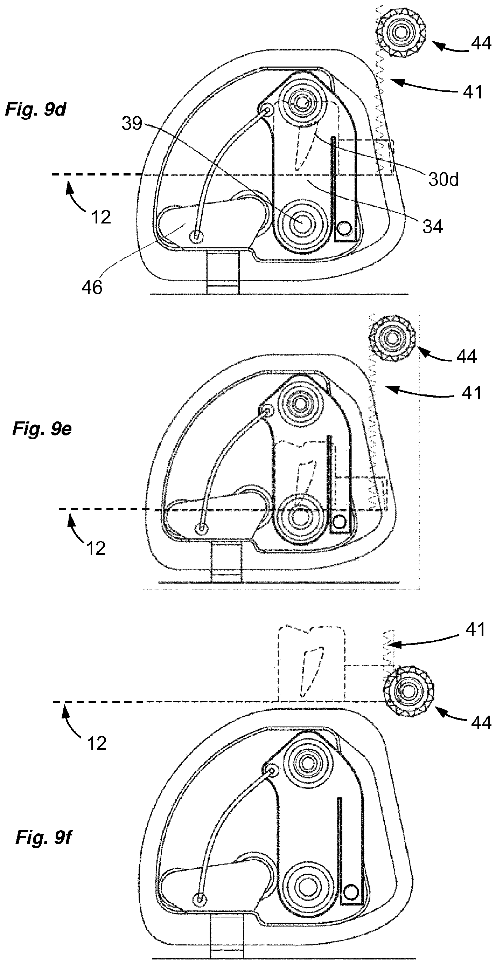

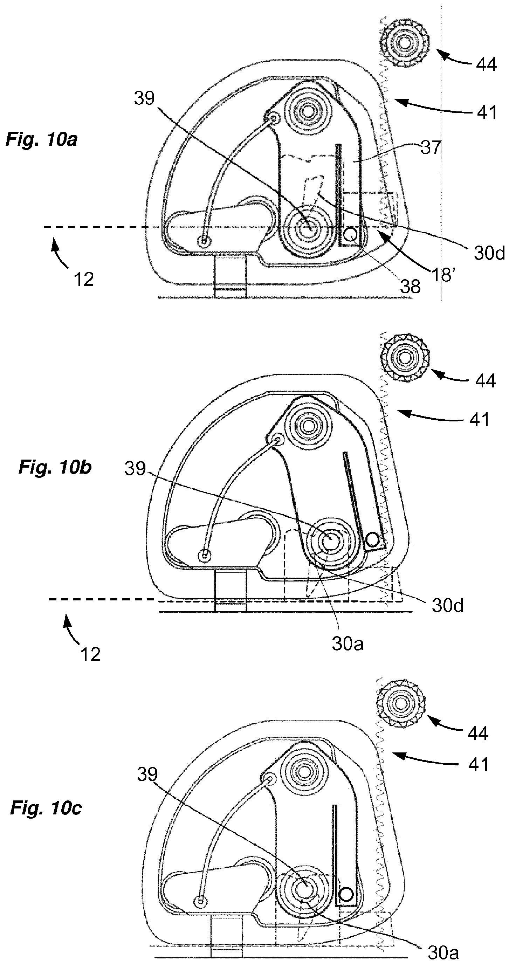

Pour des raisons de clarté, une description détaillée des différents éléments du mécanisme escamotable va être donnée dans un premier temps suivie d'une description de la cinématique de ces éléments au cours du déverrouillage et du déploiement du boitier escamotable de sa position escamotée à sa position déployée (figures 9a - 9f), et au cours du rabattement et du verrouillage du boitier escamotable dans sa position escamotée (figures 10a - 10c).

### Description des éléments du mécanisme escamotable

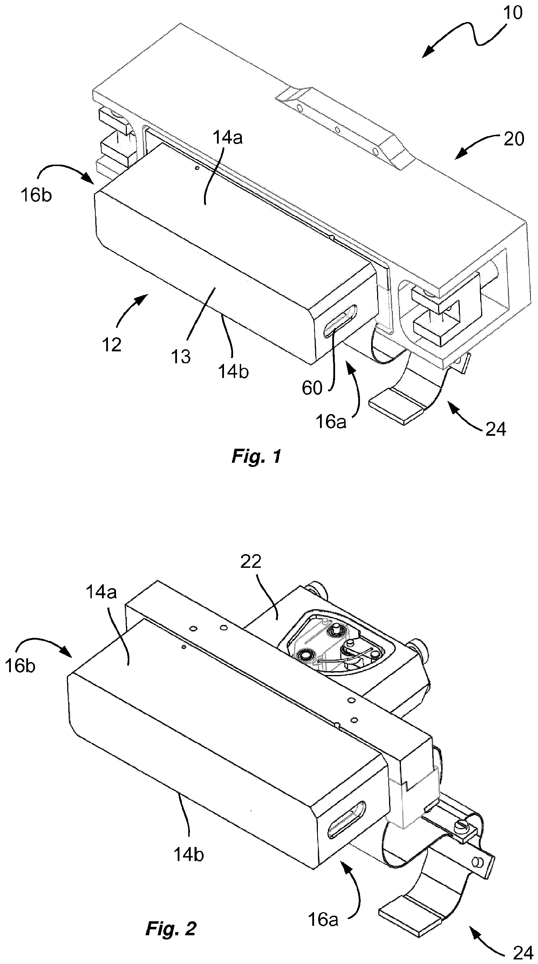

En se référant aux figures, en particulier aux figures 1 à 3, le mécanisme escamotable 10 comporte un châssis 20 et un boitier escamotable 12 dans le châssis 20. Ce dernier peut être intégré à tout type d'objet, notamment à un attaché-case ou à un appareil électronique (portable ou non). La forme du boitier escamotable 12 s'apparente à un prisme rectangulaire comportant deux parois longitudinales opposées 14a, 14b, deux parois latérales 16a, 16b de part et d'autre des parois longitudinales et une paroi d'appui 13 orthogonale aux quatre parois 14a, 14b, 16a, 16b du boitier escamotable 12. Il est à noter que la forme du boitier escamotable 12 n'est toutefois pas limitée à un prisme rectangulaire et peut par exemple s'apparenter à un cube, un prisme triangulaire ou à toute autre prisme notamment à cinq ou six faces latérales selon des variantes d'exécution. Deux pressions successives exercées sur la paroi d'appui 13 du boitier escamotable 12 permettent de positionner celui-ci respectivement dans une position escamotée dans le châssis 20 (non illustrée) et dans une position déployée par rapport au châssis 20.

Un élément fonctionnel 60 est intégré sur l'une des parois latérales 16a, 16b du boitier escamotable 12. L'élément fonctionnel 60 peut par exemple être un connecteur, une caméra, un haut-parleur, un microphone ou encore un détecteur notamment de gaz. Dans la forme d'exécution illustrée, l'élément fonctionnel est un connecteur de données par exemple du type USB pour la connexion notamment d'une clé USB ou d'un câble USB. Le boitier escamotable 12 peut toutefois comporter tout type de connecteur sur l'une quelconque de ses parois latérales 16a, 16b ou longitudinales 14a, 14b. Il peut s'agir par exemple d'un connecteur d'alimentation pour la recharge d'une batterie embarquée par exemple dans un attaché-case ou dans un appareil électronique lorsque le mécanisme escamotable est intégré à ces objets. Plusieurs connecteurs peuvent également être intégrés sur l'une et/ou l'autre des parois longitudinales 14a, 14b selon une variante d'exécution. Le châssis 20 du mécanisme escamotable 10 comporte une interface électronique 24 pour la transmission de données à l'électronique embarquée dans l'attaché-case ou dans l'appareil électronique.

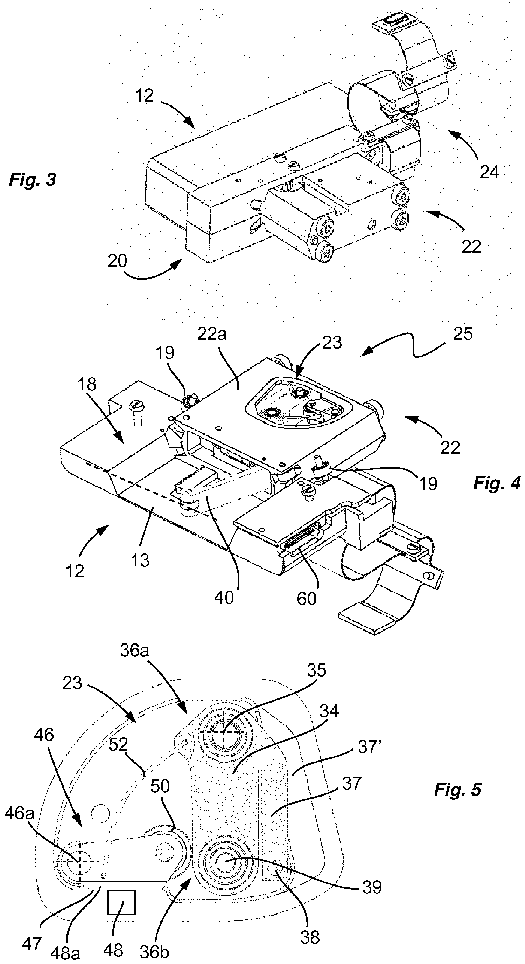

En référence aux figures 4 à 8, le mécanisme escamotable comporte un actionneur 25 du type *"push-push".* Cet actionneur 25 est configuré pour verrouiller puis déverrouiller le mécanisme escamotable 10 par deux pressions successives exercées sur la paroi d'appui 13 du boitier escamotable 12. La première pression permet d'amener le boitier escamotable 12 de sa position déployée à sa position escamotée dans laquelle il est verrouillé. La seconde pression permet de déverrouiller le boitier escamotable 12, lequel passe de sa position escamotée à sa position déployée sous l'action d'un poussoir 40.

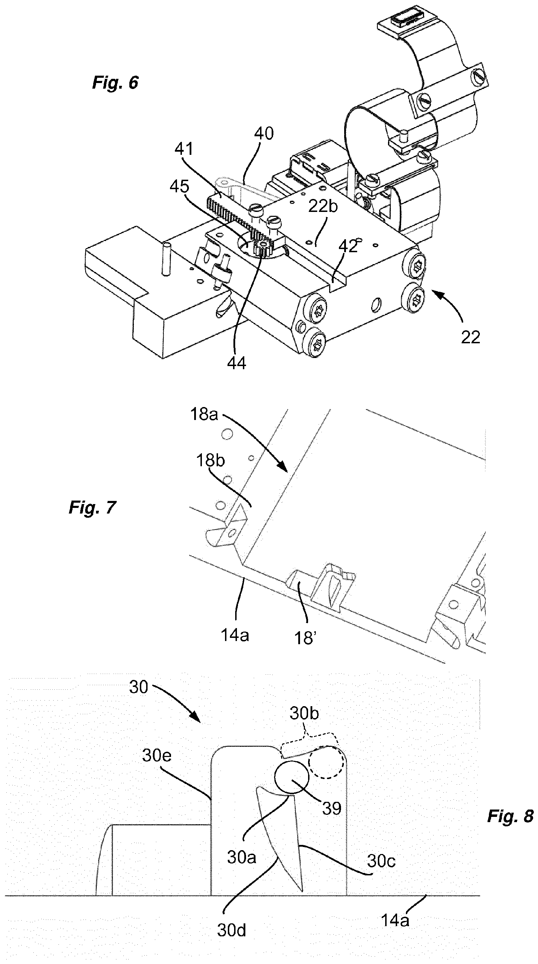

Comme on peut le voir en particulier à la figure 4, le boitier escamotable 12 comporte une chambre de reception 18 alors que l'actionneur 25 comporte un réceptacle 22 intégré au châssis 20 (figure 3) et configuré pour s'encastrer au moins en partie à l'intérieur de la chambre de réception 18 lorsque le boitier escamotable 12 est dans sa position escamotée (non illustrée). Le réceptacle 22 s'apparente également à un prisme rectangulaire dont les parois latérales sont biseautées de sorte à ce que la section transversale de celles-ci s'apparente à un triangle. Les parois latérales de la chambre de réception 18 ont une forme complémentaire comportant chacune deux faces biseautées 18b (figure 7) pourvues d'un guidage en translation sous la forme par exemple de roulements 19.

Le poussoir 40 de l'actionneur 25 est configuré pour amener le boitier escamotable 12 de sa position escamotée à sa position déployée lorsque le boitier escamotable 12 est déverrouillé. Le poussoir 40 est par exemple sous la forme d'un organe élastique configuré pour coopérer avec le réceptacle 22 et agencé au moins en partie dans la chambre de réception 18 pour être en appui contre une partie du boitier escamotable 12. Selon la présente forme d'exécution, l'organe élastique s'apparente à une lame ressort 40 dont l'une de ses extrémités est connectée au réceptacle 22 alors que l'autre de ses extrémités est en appui contre une paroi de la chambre de réception 18 faisant corps avec la paroi d'appui 13 du boitier escamotable 12. Dans une variante non illustrée, l'organe élastique comporte un ou plusieurs ressorts de compression agencé(s) dans la chambre de reception 18 en appui contre le réceptacle 22 et la paroi de la chambre de réception 18 faisant corps avec la paroi d'appui 13.

En référence aux figures 4 et 5, le réceptacle 22 comporte sur une première face 22a un logement 23 à l'intérieur duquel est disposé, d'une part, une bascule 34 agencée pour pivoter autour d'un axe de pivotement 35 et comportant un suiveur de came 39 agencé pour coopérer avec un chemin de came 30 (figures 7 et 8) et, d'autre part, un organe de retenue 46 configuré pour coopérer avec la bascule 34. La bascule 34 comporte une partie proximale 36a comportant des moyens de pivotement pour pivoter autour de l'axe de pivotement 35 et une partie distale 36b comprenant le suiveur de came 39. L'organe de retenue 46 comporte un élément d'engagement 50 agencé pour engager et exercer une force contre la partie distale 36b de la bascule 34 qui est opposée au déplacement de cette dernière lorsqu'une pression est exercée sur la paroi d'appui 13 pour le déverrouillage du boitier escamotable 12. L'élément d'engagement 50 est préférablement sous la forme d'un roulement.

L'organe de retenue 46 est agencé de sorte à pivoter autour d'un axe de pivotement 46a, sous l'action de la partie distale 36b de la bascule 34, d'une position engagée à une position désengagée. Dans la position engagée, l'organe de retenue 46 repose sur une surface d'appui 47 du logement 23 et empêche le pivotement de la bascule 34 tant que la force exercée sur la paroi d'appui 13 du boitier escamotable 12 n'excède pas une valeur de seuil prédéterminée. Dès que cette force excède cette valeur de seuil, l'organe de retenue 46 pivote dans sa position désengagée. L'organe de retenue 46 a donc pour fonction d'éviter un déverrouillage accidentel ou involontaire du mécanisme escamotable. Cette fonction est essentielle au bon fonctionnement du mécanisme escamotable selon l'invention puisque la course nécessaire de la paroi d'appui 13 pour déverrouiller le mécanisme escamotable est inférieure à 2mm, et de préférence inférieure à 1mm.

L'organe de retenue 46 comporte des moyens de maintien qui sont calibrés pour maintenir l'organe de retenue 46 contre la surface d'appui 47 dans sa position engagée tant que la force exercée par la partie distale 36b de la bascule 34 contre l'élément d'engagement 50 de l'organe de retenue 46 n'excède pas la valeur de seuil prédéterminée. Ces moyens de maintien comporte par exemple un aimant permanant 48 monté sous la surface d'appui 47 et au moins une couche d'un matériau ferromagnétique 48a disposée sur une surface de l'organe de retenue 46 destinée à venir en appui contre la surface d'appui 47 de sorte à ce que la surface d'appui 47 exerce une force d'attraction sur l'organe de retenue 46. Il va de soi que la disposition de l'aimant permanent 48 et de la couche d'un matériau ferromagnétique 48a peut être inversée pour obtenir le même effet d'attraction. Plus particulièrement, l'aimant permanent 48 peut être monté dans l'organe de retenue 46 alors que la couche ferromagnétique 48a peut être disposée sur ou sous la surface d'appui 47. Dans une autre variante, les moyens de maintien peuvent être mis en oeuvre par un organe élastique précontraint tendant à maintenir l'organe de retenue 46 contre la surface d'appui 47 dans sa position engagée.

L'organe de retenue 46 comporte en outre des moyens de rappel afin de ramener l'organe de retenue 46 dans sa position engagée. Les moyens de rappel sont par exemple sous la forme d'une liaison cinématique 52 reliant la partie proximale 36a de la bascule 34 à l'organe de retenue 46. La liaison cinématique peut être réalisée au moyen d'une lame ressort.

Le chemin de came 30 est agencé sur une paroi interne 18a de la chambre de reception 18 tel qu'illustré par la figure 7. La paroi interne 18a fait corps avec une portion de la paroi longitudinale 14a du boitier escamotable 12. Le suiveur de came 39 solidaire de la bascule 34 peut par exemple être sous la forme d'une goupille. La goupille 39 est positionnée dans une portion de verrouillage 30a du chemin de came 30 (figure 8) lorsque le boitier escamotable 12 se trouve dans sa position escamotée et que le mécanisme escamotable est verrouillé.

En référence à la figure 8, le chemin de came 30 comporte par ailleurs une portion de sortie 30c contre laquelle la goupille 39 se déplace au début du déploiement du boitier escamotable 12. Le chemin de came 30 comporte en outre une portion d'entrée 30d contre laquelle la goupille 39 se déplace à la fin du rabattement du boitier escamotable 12 dans une position escamotée. L'organe de retenue 46 est agencé pour pivoter la bascule 34 dans le sens opposé dès que la goupille 39 se désengage de la portion de sortie 30c du chemin de came 30 de sorte à déplacer latéralement la goupille 39 pour qu'elle puisse engager la portion d'entrée 30d du chemin de came 30 lorsque le boitier escamotable 12 sera ultérieurement rabattu dans sa position escamotée.

La goupille 39 est délogée de la portion de verrouillage 30a du chemin de came 30 sous l'action d'une portion d'actionnement 30b du chemin de came 30 lorsque la pression exercée sur la paroi d'appui 13 du boitier escamotable 12 excède la valeur de seuil prédéterminée. La portion d'actionnement 30b est inclinée de sorte à ce que la course de la paroi d'appui 13 nécessaire pour déverrouiller le mécanisme escamotable est de l'ordre de 0.5mm à 2mm. Au cours de cette séquence, la bascule 34 pivote autour de son axe de rotation 34 dans un sens de déverrouillage et sa partie distale 36b soulève l'organe de retenue 46 dans sa position désengagée. La bascule 34 comporte des moyens anti-retours afin d'empêcher la bascule 34 de pivoter dans un sens opposé lorsque la gouille 39 a complété son déplacement le long de la portion d'actionnement 30b (figure 8) et qu'une pression cesse d'être exercée sur la paroi d'appui 13 du boitier escamotable 12.

Selon la figure 5, la bascule 34 comporte à cet effet une lame flexible 37 s'étendant le long de son corps et en appui contre une surface d'appui 37' adjacente au logement 23 du réceptacle 22. La lame flexible 37 comporte à une extrémité un élément de blocage 38 qui peut par exemple être sous la forme d'un petit cylindre. Cet élément de blocage 38 est en appui contre la paroi 18a de la chambre de reception 18 lorsque le boitier escamotable 12 est verrouillé dans le châssis 20 du mécanisme escamotable afin qu'une partie de la lame flexible 37 soit fléchie légèrement à l'intérieur du logement 23 dans une configuration de précontrainte. Lorsque la bascule 34 pivote dans le sens de déverrouillage, l'élément de blocage 38 de la lame flexible 37 s'engage dans le chemin de came 30 contre une butée 30e sous l'effet de la contrainte exercée par la lame flexible 38. Cela a pour effet de bloquer tout mouvement de la bascule 34 dans le sens opposé lorsque la gouille 39 a complété son déplacement le long de la portion d'actionnement 30b (figure 8) sous l'effet d'une pression exercée sur la paroi d'appui 13 du boitier escamotable 12 et qu'une pression cesse d'être exercée sur celle-ci.

Selon la figure 7, la paroi 18a comporte une surface inclinée 18' adjacente au chemin de came 30 est à un bord de la paroi 18a. Cette surface inclinée 18' permet d'engager l'élément de blocage 38 de la lame flexible 37 lorsque le boitier escamotable 12 est rabattu dans sa position escamotée de sorte à ramener la lame flexible 37 dans une configuration de précontrainte.

Selon la figure 6, le réceptacle 22 comporte, sur une seconde face 22b opposée à la première face 22a (figure 4), un régulateur de vitesse pour contrôler la vitesse en translation du boitier escamotable 12 lors de son passage de sa position escamotée à sa position déployée. Le régulateur de vitesse comporte dans cette optique une crémaillère 41 connectée au boitier escamotable 12. La crémaillère 41 est montée pour se déplacer en translation à l'intérieur d'un coulisseau 42 s'étendant de part et d'autre de deux côtés opposés du réceptacle 22 dans le sens du déplacement du boitier escamotable 12. La crémaillère 41 est en prise avec un pignon 44 dont l'arbre est connecté à un amortisseur à fluide 45 du type rotatif, confiné à l'intérieur du réceptacle 22 dans une chambre cylindrique. Ceci permet de ralentir le déplacement de la crémaillère, sous l'action du poussoir 40, de manière à obtenir la vitesse souhaitée de déploiement du boitier escamotable.

Selon une variante d'exécution non-illustrée, le régulateur de vitesse comporte un amortisseur du type vérin hydraulique qui a l'avantage de ne pas dépendre de la viscosité du fluide, qui varie avec la température ambiante, mais uniquement de la masse volumique du fluide qui est invariable. Selon cette variante, la force d'amortissement n'est pas proportionnelle à la vitesse en translation du boitier escamotable 12 mais au carré de cette vitesse, ce qui permet de mieux lisser la vitesse de sortie du boitier escamotable par rapport notamment aux frottements. L'utilisation d'un vérin hydraulique a également l'avantage de pouvoir être configuré afin d'amortir la vitesse de déplacement du boitier escamotable uniquement lorsque celui-ci passe de sa position escamotée à sa position déployée. Cette configuration peut être obtenue au moyen d'un clapet antiretour agencé au niveau du passage du fluide au travers du piston du vérin.

De manière générale, l'actionneur 25 est configuré de sorte à pouvoir déverrouiller le mécanisme escamotable 10 avec une course minimale du boitier escamotable tout en prévenant un déverrouillage involontaire ou accidentel. Le rapport entre la course du boitier escamotable 12 de la position escamotée à la position déployée et la course du boitier escamotable 12 dans le sens opposé nécessaire pour le déverrouillage du mécanisme escamotable est supérieur à 10, de préférence supérieur à 20, 30, 50, 80 ou 100.

### Description fonctionnelle du mécanisme escamotable

Référence est faite aux figures 9a à 9f illustrant différentes séquences d'une partie de l'actionneur lorsque celui-ci est déverrouillé et que le boitier escamotable passe de sa position escamotée à sa position déployée.

Selon la configuration de l'actionneur partiellement illustré à la figure 9a, le boitier escamotable 12 est verrouillé dans sa position escamotée. A cet instant, la goupille 39 solidaire de la bascule 34 est positionnée dans la portion de verrouillage 30a du chemin de came 30 alors que l'organe de retenue 46 est dans sa position engagée avec son roulement 50 positionné contre la partie distale de la bascule 34.

Selon la figure 9b, lorsqu'une pression suffisante est exercée sur la surface d'appui du boitier escamotable, la portion d'actionnement 30b du chemin de came appuie contre la goupille 39, laquelle est délogée de la portion de verrouillage 30a et se déplace le long de la portion d'actionnement 30b. Ceci a pour effet de faire pivoter la bascule 34 dans un sens autour de son axe 35 et d'engager l'élément de blocage 38 dans le chemin de came contre la butée 30e sous l'action de la lame flexible 37 afin d'empêcher un pivotement involontaire de la bascule 34 dans le sens opposé. Au cours du pivotement de la bascule 34, sa partie distale actionne le pivotement de l'organe de retenue 46 de sa position engagée à sa position désengagée.

La goupille 39 étant dégagée de la portion de verrouillage 30a, le boitier escamotable va progressivement se déployer sous l'action de l'organe élastique appuyant contre la paroi de la chambre de réception faisant corps avec la surface d'appui (non illustré). Comme on peut le voir à la figure 9c, la goupille 39 se déplace le long et contre la portion de sortie 30c du chemin de came au début du déploiement du boitier escamotable.

Selon la figure 9d, une fois que la goupille 39 est dégagée de la portion de sortie 30c du chemin de came, l'organe de retenue 46 déplace la bascule 34 de sorte à positionner la goupille 39 pour qu'elle puisse engager la portion d'entrée 30d du chemin de came lorsque le boitier escamotable 12 sera rabattu dans sa position escamotée. A cet instant, le boitier escamotable 12 est libre de se déplacer en translation, sous l'action du poussoir de l'actionneur (non illustré), jusqu'à sa position déployée comme on peut le voir sur les figures 9e-9f.

Référence est faite maintenant aux figures 10a à 10c illustrant différentes séquences du verrouillage du boitier escamotable 12 lorsque le boitier escamotable 12 est rabattue de sa position déployée à sa position escamotée.

La portion d'entrée 30d du chemin de came se déplace en direction de la goupille 39 lorsque qu'une pression est exercée sur la surface d'appui du boitier escamotable. Selon la figure 10a, la goupille 39 engage le début de la portion d'entrée 30d alors que l'élément de blocage 38 de la lame flexible 37 est sur le point d'engager la surface inclinée 18' du boitier escamotable 12 de sorte à ramener la lame flexible 37 dans une configuration de précontrainte.

Selon les figures 10b, 10c, la goupille 39 se déplace ensuite le long de la portion d'entrée 30d avant d'être positionnée à nouveau dans la portion de verrouillage 30a du chemin de came verrouillant ainsi le mécanisme escamotable.

Selon les figures 9a à 10c, la crémaillère 41 est, d'une part, solidaire du boitier escamotable 12 et, d'autre part, en prise avec le pignon 44 de l'amortisseur à fluide pour réguler la vitesse en translation du boitier escamotable 12 lors de son passage de sa position escamotée à sa position déployée est réciproquement. Comme évoqué précédemment, le régulateur de vitesse peut comporter selon une variante un amortisseur du type vérin hydraulique comportant un clapet antiretour agencé au niveau du passage du fluide au travers du piston du vérin afin d'amortir la vitesse de déplacement du boitier escamotable uniquement lorsque celui-ci passe de sa position escamotée à sa position déployée.

Il va de soi que le mécanisme escamotable qui vient d'être décrit est non seulement adapté pour être intégré à un attaché-case ou à un appareil électronique portable mais aussi à tout autre objet dont l'intégration du mécanisme escamotable selon l'invention revêtirait un intérêt particulier. Les différentes pièces constituant le mécanisme escamotable peuvent par conséquent être dimensionnées notamment en fonction du type d'objet dans lequel le mécanisme est intégré et de la finalité du boitier escamotable.

### Liste de références

*Mécanisme escamotable 10*
***Boitier escamotable 12***
   *Paroi d'appui 13*
   *Parois longitudinales 14a, 14b*
   *Parois latérales 16a, 16b*
   *Chambre de réception 18*
      *Paroi interne 18a*
      *Surface inclinée 18b*
      *Guidage en translation*
         *Roulements 19*
***Châssis 20***
   *Interface électronique 24*
***Actionneur 25***
   *Réceptacle 22*
      *Face 22a*
      *Face opposée 22b*
      *Logement 23*
   *Chemin de came 30*
      *Portion de verrouillage 30a*
      *Portion d'actionnement 30b*
      *Portion de sortie 30c*
      *Portion d'entrée 30d*
      *Butée 30e*
   *Bascule 34*
      *Axe de pivotement 35*
      *Partie proximale 36a*
      *Partie distale 36b*
      *Lame flexible 37*
         *Surface d'appui 37'*
         *Elément de blocage 38*
   *Suiveur de came 39*
   *Poussoir 40*
      *Organe élastique*
         *Lame ressort*
      *Régulateur de vitesse*
         *Crémaillère 41*
         *Coulisseau 42*
         *Pignon 44*
         *Amortisseur rotatif à fluide 45*
   *Organe de retenue 46*
      *Axe de pivotement 46a*
      *Surface d'appui 47*
      *Moyens de maintien*
         *Aimant permanent 48*
         *Matériau ferromagnétique 48a*
      *Elément d'engagement 50*
         *Roulement*
      *Moyens de rappel*
         *Liaison cinématique 52*
***Elément fonctionnel 60***

## Revendications

1. **Mécanisme escamotable** (10) comportant un châssis (20), un boitier escamotable (12) configuré pour occuper une position escamotée dans laquelle le boitier escamotable (12) est verrouillé dans le châssis et une position déployée par rapport au châssis, et un actionneur (25), l'actionneur comportant un chemin de came (30) agencé sur le boitier escamotable (12), un suiveur de came (39) solidaire d'une bascule (34) agencée dans le châssis, et un poussoir (40) pour amener le boitier escamotable (12) de sa position escamotée à sa position déployée lorsque le boitier escamotable est déverrouillé, le chemin de came (30) comportant une portion de verrouillage (30a) dans laquelle le suiveur de came (39) est agencé lorsque le boitier escamotable (12) est verrouillé dans sa position escamotée, **caractérisé en ce que** l'actionneur (25) comporte en outre un organe de retenue (46) agencé pour empêcher le suiveur de came (39) de sortir de la portion de verrouillage (30a) du chemin de came (30) tant que la force exercée sur une paroi d'appui (13) du boitier escamotable (12) n'excède pas une valeur de seuil prédéterminée de sorte à empêcher un déverrouillage involontaire du mécanisme escamotable.

2. **Mécanisme escamotable** selon la revendication 1, **caractérisé en ce que** l'organe de retenue (46) est engagé contre la bascule (34) pour empêcher son pivotement tant que la force exercée sur la paroi d'appui (13) du boitier escamotable (12) est en deçà de la valeur de seuil prédéterminée.

3. **Mécanisme escamotable** selon la revendication 2, **caractérisé en ce que** l'organe de retenue (46) est agencé pour pivoter autour d'un axe de pivotement (46a) dès que la force exercée sur la paroi d'appui (13) excède la valeur de seuil prédéterminée afin de permettre à la bascule (34) de pivoter.

4. **Mécanisme escamotable** selon l'une des revendications précédentes, **caractérisé en ce que** l'organe de retenue (46) coopère avec des moyens de maintien qui sont configurés pour maintenir l'organe de retenue (46) contre un surface d'appui (47) de sorte à ce que l'organe de retenue soit engagé contre la bascule jusqu'à ce que la valeur de seuil prédéterminée est atteinte, les moyens de maintien comportant un aimant permanent (48) et un matériau ferromagnétique (48a) intégré respectivement au niveau de la surface d'appui (47) et au niveau de l'organe de retenue ou inversement de sorte à ce que la surface d'appui (27) exerce une force d'attraction sur l'organe de retenue.

5. **Mécanisme escamotable** selon l'une des revendications précédentes, **caractérisé en ce que** le rapport entre la course du boitier escamotable (12) de la position escamotée à la position déployée et la course du boitier (12) dans le sens opposé pour déverrouiller le mécanisme escamotable est supérieur à 10, de préférence supérieur à 50, voire supérieur à 100.

6. **Mécanisme escamotable** selon l'une des revendications précédentes, **caractérisé en ce que** le chemin de came (30) comporte une portion d'actionnement (30b) inclinée de sorte à ce que la course nécessaire du boitier escamotable (12) pour déverrouiller le mécanisme escamotable est inférieure à 2 mm et de préférence inférieure à 1 mm, voire inférieure à 0.5 mm.

7. **Mécanisme escamotable** selon la revendication précédente, **caractérisé en ce que** la bascule (34) comporte des moyens anti-retours (35, 35a) afin empêcher la bascule de pivoter en sens inverse lorsque le suiveur de came (39) se déplace le long de la portion d'actionnement (30b) et qu'une force n'est plus exercée sur la paroi d'appui (13) du boitier escamotable (12).

8. **Mécanisme escamotable** selon l'une des revendication précédentes, **caractérisé en ce que** le boitier escamotable (12) comporte une chambre de reception (18) configurée pour recevoir un réceptacle (22) lorsque le boitier escamotable (12) est dans sa position escamotée, le réceptacle comportant un logement (23) dans lequel sont montés la bascule (34) et l'organe de retenue (46).

9. **Mécanisme escamotable** selon l'une des revendication précédentes, **caractérisé en ce que** le poussoir (40) comporte un organe élastique configuré pour coopérer avec le réceptacle (22) et agencé au moins en partie dans la chambre de réception (18), l'organe élastique étant en appui contre une partie du boitier escamotable (12).

10. **Mécanisme escamotable** selon l'une des revendication précédentes, **caractérisé en ce que** le chemin de came (30) comporte une portion de sortie (30c) contre laquelle le suiveur de came (39) se déplace lors du déploiement du boitier escamotable (12), ainsi qu'une portion d'entrée (30d) contre laquelle le suiveur de came (39) se déplace lors du rabattement du boitier escamotable (12) dans une position escamotée, l'organe de retenue (46) étant configuré pour déplacer la bascule (34) dès que le suiveur de came (39) se désengage du chemin de came (30) de sorte à positionner le suiveur de came (39) pour qu'il puisse engager la portion d'entrée (30d) du chemin de came lorsque que le boitier escamotable (12) est rabattu dans sa position escamotée.

11. **Mécanisme escamotable** selon l'une des revendications précédentes, **caractérisé en ce que** le poussoir (40) comporte un régulateur de vitesse comprenant une crémaillère (41) connectée au boitier escamotable (12), la crémaillère étant en prise avec un pignon (44) et montée pour se déplacer en translation par rapport au châssis (20).

12. **Mécanisme escamotable** selon l'une des revendications précédentes, **caractérisé en ce que** le boitier escamotable (12) à une forme s'apparentant à un cube ou à un prisme rectangulaire comportant quatre parois (14a, 14b, 16a, 16b) orthogonales à la paroi d'appui (13) du boitier escamotable (12), et **en ce qu'**au moins un élément fonctionnel (60) est intégré sur l'une des quatre parois du cube ou du prisme rectangulaire.

13. **Mécanisme escamotable** selon la revendication précédente, **caractérisé en ce que** l'élément fonctionnel (60) est sélectionné parmi les éléments fonctionnels du groupe comportant un connecteur de données, un connecteur d'alimentation, une caméra, un haut-parleur, un microphone et un détecteur.

14. **Attaché-case** comportant le mécanisme escamotable selon l'une des revendications précédentes.

15. **Appareil électronique,** de préférence portable, comportant le mécanisme escamotable selon l'une des revendications 1 à 13.
